# EUROPÄISCHE PATENTANMELDUNG

(11) **EP 4 002 668 A1**
(43) Veröffentlichungstag der Anmeldung: **25.05.2022**
(21) Anmeldenummer: 20207452.2
(22) Anmeldetag: 13.11.2020
(51) Int. Cl.: H02M 3/335, H02M 1/00, H02M 7/00

(54) **VERFAHREN UND SCHALTUNG ZUR REGELUNG EINES RESONANZWANDLERS**

(71) Anmelder: Siemens Aktiengesellschaft, 80333 München (DE)
(72) Erfinder: Rothmayer, Thomas, 1140 Wien (AT)
(74) Vertreter: Maier, Daniel Oliver

(57) **Zusammenfassung**

Die Erfindung betrifft ein Verfahren zur Regelung eines Resonanzwandlers mit einer galvanischen Trennung (T), insbesondere einem Transformator (T), sowie eine zugehörige Schaltungsanordnung. Der Resonanzwandler weist primärseitig zumindest zwei Schaltelemente (S1, S2) auf, welchen jeweils eine Schaltfrequenz vorgegeben wird. Sekundärseitig ist der Resonanzwandler über die galvanische Trennung (T) mit einer Gleichrichtereinheit (GL) zum Erzeugen einer Ausgangsspannung (Ua) verbunden. Für die Regelung des Resonanzwandlers wird sekundärseitig ein Stromfluss der auftretenden, positiven und negativen Halbwellen eines sekundärseitig induzierten Stroms (i_{sec}) als Messsignal (M1, M2) erfasst (101). Dann wird z.B. mittels einer Auswerteeinheit (AW) analog oder digital aus dem als Messsignal (M1, M2) erfassten Stromfluss des sekundärseitig induzierten Stroms (i_{sec}) eine Stromflussdauer sowie eine Zeitdauer einer Stromflusslücke des sekundärseitig induzierten Stroms (i_{sec}) für eine jeweilige Gesamtperiodendauer abgeleitet (102) und ein Verhältnis aus Stromflussdauer und Zeitdauer der Stromflusslücke des sekundärseitig induzierten Stroms (iₛₑc) für die jeweilige Gesamtperiodendauer bestimmt (103). Die Schaltfrequenzen der Schaltelemente (S1, S2) des Resonanzwandlers werden z.B. über die Reglereinheit (RE) solange dann nachgeregelt (104), bis das Verhältnis der Stromflussdauer des sekundärseitig induzierten Stroms (i_{sec}) und der Zeitdauer der Stromflusslücke des sekundärseitig induzierten Stroms (i_{sec}) einen Maximalwert erreicht (103, 105).

## Beschreibung

### Technisches Gebiet

Die gegenständliche Erfindung betrifft allgemein das Gebiet der Elektrotechnik, insbesondere den Bereich der Leistungselektronik und leistungselektronischer Schaltungen zur Stromversorgung. Im Speziellen bezieht sich die vorliegende Erfindung auf ein Verfahren zur Regelung eines Resonanzwandler mit einer galvanischen Trennung, insbesondere einem Transformator. Der Resonanzwandler weist primärseitig zumindest zwei Schaltelemente auf, welchen jeweils eine Schaltfrequenz vorgegeben wird. Sekundärseitig ist der Resonanzwandler über die galvanische Trennung mit einer Gleichrichtereinheit zum Erzeugen einer Ausgangsspannung verbunden. Darüber hinaus offenbart die vorliegende Anmeldung eine zugehörige Schaltungsanordnung zur Regelung eines Resonanzwandlers, welcher eine galvanische Trennung, insbesondere einen Transformator, zumindest zwei primärseitig angeordnete Schaltelemente sowie eine sekundärseitig angeordnete Gleichrichtereinheit aufweist. Dabei ist die Schaltungsanordnung zur Durchführung des erfindungsgemäßen Verfahrens eingerichtet.

### Stand der Technik

Heutzutage werden in modernen Stromversorgungen für elektrische Geräte immer häufiger Resonanzwandler zur Energieübertragung eingesetzt. Durch einen Einsatz von Resonanzwandlern, welche im Englischen auch als "resonant converter" bezeichnet werden, können beispielsweise Verlustleistungen reduziert bzw. bessere Wirkungsgrade erzielt werden und die elektromagnetische Verträglichkeit verbessert werden bzw. Störungen durch ungewollte elektrische und/oder elektromagnetische Effekten verringert werden.

Resonanzwandler stellen eine spezielle schaltungstechnische Form eines Gleichspannungswandlers dar, welcher zur Energieübertragung mit einem Schwing- bzw. Resonanzkreis arbeitet, wobei ein Resonanzwandler im Gegensatz zu Umformern ohne mechanisch bewegte Teile arbeitet. Dabei wandelt der Resonanzwandler eine eingangsseitige Gleichspannung in eine ein- oder mehrphasige Wechselspannung um, wobei er für einen optimalen Betrieb typischerweise mit annähernd konstanter Last betrieben wird. Die Wechselspannung kann durch eine Gleichrichtereinheit ausgangsseitig wieder gleichgerichtet werden. Erfolgt keine Gleichrichtung auf der Ausgangsseite des Resonanzwandler, so bezeichnet man den Resonanzwandler auch als Wechselrichter oder auch als Inverter.

Bei einem Resonanzwandler sorgt üblicherweise ein Schwing- oder Resonanzkreis dafür, dass steuerbare Schaltelemente des Resonanzwandlers im Wesentlichen im Strom- oder im Spannungsnulldurchgang geschaltet werden. Dadurch werden Schaltverluste in den Schaltelementen sowie elektromagnetische Störungen geringgehalten. Der Resonanzkreis kann je nach Schaltungsaufbau primär- oder sekundärseitig angeordnet sein und als Serien- oder Parallelresonanzkreises aus zumindest einer Induktivität und zumindest einer Kapazität aufgebaut sein. Üblicherweise bildet die leistungsübertragende Strecke mit der galvanischen Trennung bzw. dem Transformator gemeinsam mit zusätzlichen Induktivitäten und Kapazitäten den Resonanz- bzw. Schwingkreis. Dabei wird ein Bereich einer Schaltfrequenz, mit welcher die primärseitigen Schaltelemente geschaltet werden können, durch diese zusätzlichen Induktivitäten und Kapazitäten mitbestimmt und so die Verlustleistung während der Schaltvorgänge minimiert. Je nach Anwendung können Resonanzwandler z.B. als so genannte LLC-(=LCL)- oder LCC-Konverter ausgebildet sein.

Zur Regelung der Ausgangsspannung werden Resonanzwandler üblicherweise mit festem Tastverhältnis und variabler Frequenz bzw. Schaltfrequenz angesteuert, wobei eine Pulslänge zumindest im Wesentlichen einer halben Schwingungsdauer des Resonanzkreises entspricht, um ein Ein- und vor allem Ausschalten der steuerbaren Schaltelemente im Schwingungsnulldurchgang (z.B. des Stroms oder der Spannung) zu ermöglichen. Dabei kann zwischen Resonanzwandlern, die im Spannungsnulldurchgang (so genanntes Zero Voltage Switching oder ZVS) oder im Stromnulldurchgang (so genanntes Zero Current Switching oder ZCS) schalten, unterschieden werden, wobei meist beides zusammenfällt.

Resonanzwandler weisen aufgrund ihrer frequenzabhängigen Komponenten (z.B. Kondensatoren, Spulen, Transformatoren, etc.) ein frequenzabhängiges Spannungsübersetzungsverhältnis zwischen Ausgangsspannung und Eingangsspannung auf. Dadurch kann durch Veränderung der Schaltfrequenz ein Übersetzungsverhältnis eingestellt werden, welches einen Wert größer, kleiner oder gleich 1 aufweisen kann. Durch beispielsweise entsprechende Wahl der Windungszahlen des im Resonanzwandler eingesetzten Transformators kann dieses Übersetzungsverhältnis weiter angepasst werden. Dieses Übersetzungsverhältnis ist jedoch bis auf eine spezielle Schaltfrequenz lastabhängig. Da Resonanzwandler in der Regel aus zwei oder mehreren frequenzabhängigen Komponenten (z.B. Kondensatoren, Spulen, Transformatoren, etc.) bestehen, gibt es oft mehrere Resonanzfrequenzen, wobei meist nur bei einer bestimmten Resonanzfrequenz ein lastunabhängiges Übersetzungsverhältnis auftritt. Nur bei Betrieb mit exakt dieser Resonanzfrequenz als Schaltfrequenz für die primärseitigen Schaltelemente bzw. bei Betrieb im so genannten Resonanzpunkt weist der Resonanzwandler nahezu keine bzw. sehr geringe Schaltverluste und einen sehr hohen Wirkungsgrad auf und arbeitet am effizientesten.

Eine genaue Bestimmung dieser Resonanzfrequenz bzw. des Resonanzpunktes kann beispielsweise mit speziellen Messgeräten durchgeführt werden. So kann z.B. eine Analyse eines Stroms durch den Resonanzwandler durchgeführt werden. Die Resonanzfrequenz ist beispielsweise dann gefunden, je genauer die Form dieses Stroms einer Sinusform entspricht.

Eine andere Möglichkeit zur Bestimmung der Resonanzfrequenz eines Resonanzwandlers stellt z.B. eine genaue Vermessung der Komponenten des Resonanzkreises - d.h. der Induktivitäten und Kapazitäten - dar. Aus den gemessenen Induktivitäts- und Kapazitätswerten kann dann beispielsweise die Resonanzfrequenz rechnerisch abgeleitet werden.

Beide Methoden können zwar bei Einzelgeräten z.B. bei Labor- oder Testeinsätzen zur Bestimmung der Resonanzfrequenz eines Resonanzwandler genutzt werden, sind allerdings z.B. für einen Einsatz bei einer Serienproduktion ungeeignet. Da beispielsweise in der Massenproduktion hergestellte Induktivitäten und/oder Kapazitäten, wie sie bei in Serie produzierten Resonanzwandler eingesetzt werden, immer Toleranzen aufweisen, müsste für jeden Resonanzwandler die entsprechende Resonanzfrequenz durch Messung und/oder Berechnung ermittelt werden. Damit sind eine Bestimmung der Resonanzfrequenz eines Resonanzwandler durch Messung bzw. durch Berechnung für eine Serienproduktion ungeeignet, um Stromversorgungen mit Resonanzwandler schnell und automatisch zu kalibrieren. Weiterhin kann es aufgrund von Bauteilalterung und/oder Veränderungen bei der zu übertragenden Leistung notwendig sein, die Resonanzfrequenz eines Resonanzwandlers während seiner Einsatzdauer bei einer Stromversorgung bzw. im laufenden Betrieb neu einzustellen bzw. so zu regeln, dass ein Resonanzbetrieb sichergestellt ist.

Aus der Schrift EP 2 961 054 B1 ist ein Verfahren sowie eine Schaltungsanordnung zur Regelung eines Resonanzwandlers mit zwei Transistoren bekannt, wobei den Transistoren jeweils eine Schaltfrequenz vorgegeben wird. Weiterhin ist der Resonanzwandler über eine galvanische Trennung mit einem selbstgeführten Synchrongleichrichter verbunden, welcher ebenfalls Transistoren aufweist. Dabei wird zumindest ein Ansteuersignal der Transistoren des Resonanzwandlers, welche primärseitig angeordnet sind, und zumindest ein Ansteuersignal der Transistoren des Synchrongleichrichters, welche sekundärseitig angeordnet sind, mittels Differenzbildung miteinander verglichen. Um einen Resonanzbetrieb des Resonanzwandlers zu erreichen, wird dabei die Schaltfrequenz der primärseitigen Transistoren des Resonanzwandlers basierend auf einer ermittelten Differenz zwischen den Ansteuersignalen der Resonanzwandler-Transistoren und der Synchrongleichrichter-Transistoren derart nachgeregelt, dass die Differenz gleich Null wird. Das bedeutet, die Schaltfrequenz der Resonanzwandler-Transistoren wird solange angepasst, bis die jeweiligen Ansteuersignale der Resonanzwandler-Transistoren und der Synchrongleichrichter-Transistoren annähernd ident sind.

Das in der Schrift EP 2 961 054 B1 offenbarte Regelverfahren für einen Resonanzwandler weist damit den Nachteil auf, dass ein primärseitiges Ansteuersignal mit einem sekundärseitigem Ansteuersignal verglichen wird. Für den Vergleich der Signale ist es damit notwendig, eines der beiden Signal über die galvanische Trennung mit einer entsprechenden Genauigkeit und Geschwindigkeit zu übertragen. Dies führt zu einer relativ aufwendigen Auswerteschaltung. Weiterhin kann die Signalübertragung zu Verzögerungen, Ungenauigkeiten und/oder Störungen führen, welche sich negativ auf die Regelung des Resonanzwandlers auswirken können bzw. wodurch ein Resonanzbetrieb des Resonanzwandlers schwer bis kaum erreicht wird.

### Darstellung der Erfindung

Der Erfindung liegt daher die Aufgabe zugrunde, ein Regelverfahren sowie eine zugehörige Schaltungsanordnung für einen Resonanzwandler anzugeben, durch welche auf einfache Weise und ohne aufwendige Auswertungen, vor allem im laufenden Betrieb, eine Resonanzfrequenz des Resonanzwandlers schnell und automatisch eingestellt werden kann.

Diese Aufgabe wird durch ein Verfahren zur Regelung eines Resonanzwandlers sowie durch eine zugehörige Schaltungsanordnung gemäß den unabhängigen Ansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Regelverfahren für einen Resonanzwandler der eingangs erwähnten Art, welcher sekundärseitig über eine galvanische Trennung, vorzugsweise über einen Transformator, mit einer Gleichrichtereinheit zum Erzeugen einer Ausgangsspannung verbunden ist, und welcher primärseitig zumindest zwei Schaltelemente aufweist, welchen jeweils eine z.B. über eine Ansteuerung eine Schaltfrequenz vorgegeben wird. Dabei wird sekundärseitig ein Stromfluss auftretender, positiver Halbwellen und negativen Halbwellen eines sekundärseitig induzierten Stroms als Messsignal erfasst. Aus dem als Messsignal erfassten Stromfluss des sekundärseitig induzierten Stroms - d.h. den positiven und negativen Halbwellen des sekundärseitigen Stroms - werden eine Stromflussdauer und eine Zeitdauer einer Stromflusslücke bezogen auf eine jeweilige Gesamtperiodendauer (d.h. einen Dauer von positiver Halbwelle, negativer Halbwelle und auftretenden Stromlücken zwischen den Halbwellen des sekundärseitigen Stroms) abgeleitet. Die abgeleitete Stromflussdauer wird dann zur abgeleiteten Zeitdauer der Stromflusslücke des sekundärseitigen Stroms in ein Verhältnis gesetzt und dann primärseitig die Schaltfrequenz des Resonanzwandlers bzw. die Schaltfrequenzen, mit welchen die zumindest zwei, primärseitigen Schaltelemente takten, solange nachgeregelt, bis das Verhältnis der Stromflussdauer des sekundärseitig induzierten Stroms und der Zeitdauer der Stromflusslücke des sekundärseitig induzierten Stroms einen Maximalwert aufweist.

Der Hauptaspekt der erfindungsmäßig vorgeschlagenen Lösung besteht darin, dass durch das Überprüfen des Verhältnisses der Stromflussdauer und der Zeitdauer der Stromflusslücke des sekundärseitig induzierten Stroms auf Erreichen des Maximalwerts bei laufender Nachregelung der Schaltfrequenz des Resonanzwandlers der Resonanzwandler genau auf den Resonanzpunkt geregelt wird bzw. auf einfache Weise dauerhaft in Resonanz betrieben werden kann. Mit der Auswertung des Stromflusses des sekundärseitig induzierten Stroms, vor allem mit der Auswertung einer Stromflussdauer, während welcher der sekundärseitig induzierte Strom einen Betrag mit einem Wert größer Null aufweist, und der Zeitdauer der Stromflusslücke, während welcher der sekundärseitig induzierte Strom einen Betrag gleich dem Wert Null ist, kann ohne großen Aufwand in den Resonanzkreis eingegriffen werden. Resonanzwandler aus Serienproduktion können damit sehr einfach, schnell und automatisch kalibriert bzw. eine Schaltfrequenz, welche der Resonanzfrequenz entspricht, eingestellt werden. Weiterhin können durch das erfindungsgemäße Verfahren auch Veränderungen durch unterschiedliche übertragene Leistungen sowie Veränderungen der Resonanzfrequenz aufgrund von Bauteilalterung berücksichtigt werden.

Idealerweise können zum Erfassen des Stromflusses der auftretenden, positiven und negativen Halbwellen des sekundärseitig induzierten Stroms als Messsignal Messwiderständen (z.B. Shunt-Messwiderstände, etc.) eingesetzt werden. Als Messsignal kann für eine Auswertung beispielsweise sehr einfach ein Spannungsabfall am jeweiligen Messwiderstand, welcher durch eine positive oder negative Halbwelle des sekundärseitigen Stroms verursacht wird, herangezogen werden. Die Messwiderstände können beispielsweise in Serie vor oder nach dem jeweiligen Gleichrichterelement (z.B. Diode) der Gleichrichtereinheit angeordnet sein.

Eine besonders bevorzugte Weiterbildung der Erfindung sieht vor, dass in der Gleichrichtereinheit zumindest zwei Schaltelemente z.B. anstatt Dioden eingesetzt werden, wobei die zumindest zwei Schaltelemente jeweils mittels zugehöriger Ansteuereinheit angesteuert werden. D.h., die Gleichrichtereinheit ist als so genannter Synchrongleichrichter ausgeführt. Als Schaltelemente können z.B. Feldeffekttransistoren, insbesondere MOS-FETs bzw. Silizium-MOS-FETs oder Galliumnitrid-Schalter verwendet werden. Als Messwiderstand bzw. als Einheit zum Erfassen des Stromflusses des sekundärseitig induzierten Stroms bzw. der auftretenden positiven und negativen Halbwellen des Stroms werden dabei idealerweise jeweilige Schaltwiderstände der zumindest zwei Schaltelemente herangezogen. Durch den Einsatz eines Synchrongleichrichters als Gleichrichtereinheit kann die Verlustleistung der Schaltung reduziert werden. Die Schaltelemente des Synchrongleichrichters werden mittels entsprechenden Ansteuersignalen während einer Leitphase einer intrinsischen Diode des jeweiligen Schaltelements eingeschaltet und während einer Sperrphase der intrinsischen Diode des jeweiligen Schaltelements ausgeschaltet. Dadurch können auf einfache Weise die Ansteuersignale der zumindest zwei Schaltelemente zum Erfassen eines Stromflusses bzw. zum Ableiten einer Stromflussdauer und einer Zeitdauer einer Stromflusslücke des sekundärseitigen Stroms herangezogen werden.

Es ist dabei weiterhin von Vorteil, wenn die zumindest zwei Schaltelemente der Gleichrichtereinheit von den zugehörigen Ansteuereinheiten linear angesteuert werden. Durch eine lineare Ansteuerung der Schaltelemente wird eine Stromtragzeit des jeweiligen Schaltelements bzw. die Dauer des Stromdurchflusses des sekundärseitigen Stroms durch das jeweilige Schaltelement deutlich erhöht. Auf diese Weise kann die Genauigkeit des Erreichen des Resonanzpunkts weiter verbessert werden. Weiterhin wird die Verlustleistung reduziert bzw. der Wirkungsgrad des Resonanzwandler bzw. der Schaltung weiter verbessert, da über das jeweils leitende Schaltelement länger Strom geführt wird.

Alternativ zur Erfassung des Stromflusses des sekundärseitig induzierten Stroms mittels eines Messwiderstands kann der Stromfluss des sekundärseitig induzierten Stroms - d.h. der jeweils auftretenden positiven und negativen Halbwellen - auch induktiv erfasst werden. Dazu können beispielsweise induktive Stromwandler als Einheiten zum Erfassen des Stromflusses, wie z.B. Hallsensoren, Stromzangen, Rogowski-Stromwandler, etc., verwendet werden. Die induktiven Stromwandler können beispielsweise derart angebracht sein, dass ein Stromfluss über das jeweilige Gleichrichterelement (z.B. Diode) der Gleichrichtereinheit als Messsignal erfasst wird.

Eine bevorzugte Fortbildung der Erfindung sieht vor, dass zum Ableiten der Stromflussdauer und der Zeitdauer der Stromflusslücke des sekundärseitig induzierten Stroms für die jeweilige Gesamtperiodendauer und zum Bilden des Verhältnisses von Stromflussdauer und Zeitdauer der Stromflusslücke des sekundärseitig induzierten Stroms der als Messsignal erfasste Stromfluss einer Auswerteeinheit zugeführt wird. Die Auswerteeinheit kann z.B. als eigenständige Einheit (z.B. Mikrokontroller) ausgeführt sein oder in eine Regeleinheit integriert sein, durch welche eine Nachregelung der Schaltfrequenz des Resonanzwandlers erfolgt. Durch den Einsatz der Auswerteeinheit kann auf verschiedene Weise in den Resonanzkreis eingegriffen werden - d.h. eine Nachregelung auf den Resonanzpunkt kann beispielsweise zeitnah oder zeitverzögert erfolgen.

Die Stromflussdauer und die Zeitdauer der Stromflusslücke des sekundärseitig induzierten Stroms für die jeweilige Gesamtperiodendauer können aus dem als Messsignal erfassten Stromfluss des sekundärseitig induzierten Stroms idealerweise analog oder digital bestimmt werden. Je nach Art der Auswertung (analog oder digital) kann die Auswerteeinheit entsprechend eingerichtet bzw. ausgestaltet sein.

Weiterhin können beim Ableiten der Stromflussdauer und der Zeitdauer der Stromflusslücke des sekundärseitig induzierten Stroms für die jeweilige Gesamtperiodendauer aus dem als Messsignal erfassten Stromfluss Schaltungstoleranzen und/oder Bauteiltoleranzen ausgeglichen werden. Damit kann der Resonanzwandler noch genauer und besser auf den Resonanzpunkt geregelt werden.

Weiterhin erfolgt die Lösung der genannten Aufgabe durch eine Schaltungsanordnung zur Regelung eines Resonanzwandlers, welcher zumindest zwei Schaltelemente und eine galvanische Trennung, insbesondere einen Transformator, aufweist. Die Schaltungsanordnung weist eine sekundärseitig angeordnete Gleichrichtereinheit auf und ist zur Durchführung des Verfahrens zur Regelung des Resonanzwandlers eingerichtet. Weiterhin weist die Schaltungsanordnung sekundärseitig angeordnete Einheiten zum Erfassen eines Stromflusses von auftretenden, positiven und negativen Halbwellen des sekundärseitigen Stroms als Messsignal, eine Auswerteeinheit, von welcher aus dem als Messsignal erfassten Stromfluss des sekundärseitigen Stroms eine Stromflussdauer des sekundärseitig induzierten Stroms sowie eine Zeitdauer einer Stromflusslücke des sekundärseitig induzierten Stroms abgeleitet und ein Verhältnis der Stromflussdauer und der Zeitdauer der Stromflusslücke des sekundärseitig induzierten Stroms bestimmt wird, sowie eine Reglereinheit, welche zum Nachregeln der Schaltfrequenzen der zumindest zwei Schaltelemente des Resonanzwandlers auf Basis des Verhältnisses zwischen Stromflussdauer und Zeitdauer der Stromflusslücke des sekundärseitig induzierten Stroms eingerichtet ist.

Durch diese Schaltungsanordnung kann ein Resonanzwandler sehr einfach und ohne großen Aufwand auf den Resonanzpunkt geregelt werden und dauerhaft mit der Resonanzfrequenz als Schaltfrequenz betrieben werden. Dadurch kann der Resonanzwandler mit einem hohen Wirkungsgrad bzw. geringen Verlusten betrieben werden, ohne das aufwendige Berechnungen oder Ermittlungen des Resonanzpunktes notwendig sind.

Es ist vorteilhaft, wenn die Einheiten zum Erfassen des Stromflusses von auftretenden, positiven und negativen Halbwellen des sekundärseitig induzierten Stroms als induktive Stromwandler (z.B. Hallsensoren, Stromzange, Rogowski-Stromwandler, etc.) ausgeführt sind. Die induktiven Stromwandler können dabei derart angeordnet sein, dass ein Stromfluss durch die Gleichrichtereinheit bzw. jeweilige Diode erfasst wird, welcher von positiven bzw. negativen Halbwellen des sekundärseitigen Stroms bewirkt wird.

Alternativ können als Einheiten zum Erfassen des Stromflusses der auftretenden, positiven und negativen Halbwellen des sekundärseitig induzierten Stroms auch Messwiderstände eingesetzt sein. Diese können in Serie vor oder nach dem Gleichrichterelemente (z.B. Diode) der Gleichrichtereinheit angeordnet sein, sodass der durch die positive bzw. negative Halbwelle des sekundärseitigen Stroms erzeugte Stromfluss einen Spannungsabfall am jeweiligen Messwiderstand bewirkt. Die jeweiligen Spannungsabfälle können dann z.B. als Messsignal von der Auswerteeinheit genutzt werden.

Eine bevorzugte Ausführungsform der Schaltungsanordnung sieht vor, dass die Gleichrichtereinheit als Synchrongleichrichter ausgeführt ist. Der Synchrongleichrichter weist zumindest zwei Schaltelemente (z.B. Feldeffekttransistoren bzw. kurz: FETs, insbesondere MOS-FETs oder Galliumnitrid-Schalter) auf, welche über zugehörige Ansteuereinheiten mittels Ansteuersignalen angesteuert werden. Beim Einsatz eines Synchrongleichrichters werden idealerweise die Schaltwiderstände als Einheiten zum Erfassen des Stromflusses der jeweiligen positiven und negativen Halbwellen des sekundärseitig induzierten Stroms verwendet. Bei dieser Ausführungsform kann auf zusätzliche Einheiten, wie z.B. Messwiderstände oder induktive Stromwandler, etc., verzichtet werden.

Es ist weiterhin günstig, wenn die Auswerteeinheit in die Reglereinheit integriert ist. Für die Realisierung der kombinierten Auswerte- und Reglereinheit kann z.B. ein Mikrokontroller verwendet werden, welcher z.B. mittels einer entsprechenden Beschaltung zur Bestimmung der Stromflussdauer des sekundärseitig induzierten Stroms sowie der Zeitdauer der Stromflusslücke des sekundärseitig induzierten Stroms aus dem als Messsignal erfassten Stromfluss z.B. als Analogwert erweitert ist oder zur digitalisierten Bestimmung von Stromflussdauer und Zeitdauer der Stromflusslücke des sekundärseitigen Stroms eingerichtet ist.

Weiterhin kann es vorteilhaft sein, wenn der Resonanzwandler als Serienresonanzwandler, insbesondere als LLC-Wandler, ausgeführt ist.

### Kurzbeschreibung der Zeichnung

Die Erfindung wird nachfolgend in beispielhafter Weise anhand der beigefügten Figuren erläutert. Es zeigen dabei:
- Figur 1: in schematischer und beispielhafter Weise ein Schaltungsanordnung zur Durchführung des erfindungsgemäßen Verfahrens zur Regelung eines Resonanzwandlers
- Figur 2: beispielhaft eine spezielle Ausführungsform der Schaltungsanordnung zur Durchführung des erfindungsgemäßen Regelungsverfahrens für einen Resonanzwandler
- Figur 3: beispielhaft einen Ablauf des erfindungsgemäßen Verfahrens zur Regelung eines Resonanzwandlers

### Ausführung der Erfindung

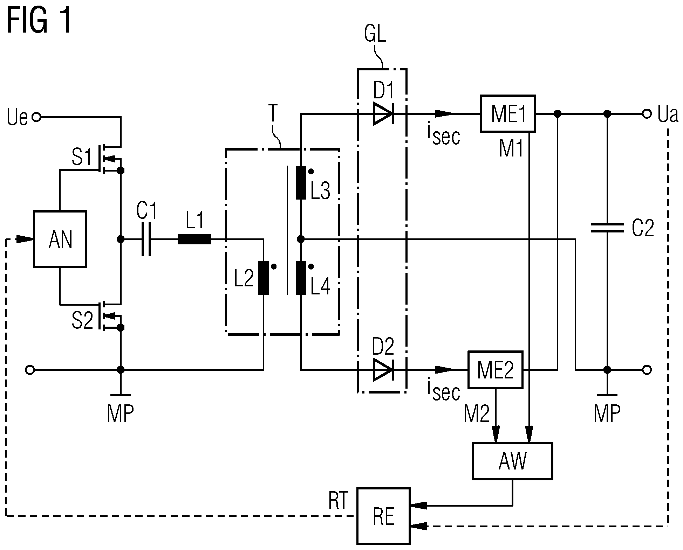

In Figur 1 ist beispielhaft und schematisch eine Schaltungsanordnung dargestellt, welche zur Durchführung des erfindungsgemäßen Verfahrens zur Regelung eines Resonanzwandlers eingerichtet ist. Diese Schaltungsanordnung weist einen Resonanzwandler mit einer galvanischen Trennung T auf. Die galvanische Trennung T ist dabei als Transformator T mit einer Primärseite und einer Sekundärseite ausgestaltet. Auf der Primärseite wird eine Eingangsspannung Ue (Gleichspannung) an den Resonanzwandler angelegt, welche auf der Sekundärseite vom Resonanzwandler in eine z.B. ein- oder mehrphasige Wechselspannung gewandelt wird. Die sekundäre Wechselspannung wird durch eine Gleichrichtereinheit GL in eine vorgebbare Ausgangsspannung Ua gleichgerichtet. Die Eingangsspannung Ue und die Ausgangsspannung Ua können dabei auf ein Bezugspotential MP bezogen sein.

Der Resonanzkreis des Resonanzwandler, welcher beispielsweise als so genannter LLC-Resonanzwandler ausgestaltet ist, wird durch eine Resonanzkapazität C1, eine Resonanzinduktivität L1 sowie eine Primärwicklung L2 des Transformators T gebildet.

Weiterhin weist der Resonanzwandler primärseitig zumindest zwei Schaltelemente S1, S2 auf, welche beispielsweise als Halbbrückenschaltung angeordnet sind. Der Resonanzwandler kann allerdings auch eine Vollbrückenschaltung aufweisen, welche dann vier Schaltelemente S1, S2 aufweist. Als Schaltelemente S1, S2 können beispielsweise MOS-FETs, bipolare Transistoren oder IGBTs eingesetzt werden.

Die Schaltelemente S1, S2 des Resonanzwandlers werden abwechselnd mit einer kurzen Pause - einer so genannten Totzeit - geschaltet. Bei Verwendung einer Vollbrückenschaltung mit vier Schaltelementen S1, S2 werden jeweils zwei Schaltelemente S1, S2 gleichzeitig eingeschaltet bzw. ausgeschaltet, welche z.B. diagonal gegenüberliegend in der Brückenschaltung angeordnet sind. Für ein entsprechendes Takten wird den Schaltelementen S1, S2 jeweils über eine Ansteuerung AN eine Schaltfrequenz in Form von Ansteuersignalen vorgegeben. Dadurch werden die Schaltelemente S1, S2 - bei einer Halbbrückenschaltung wie in Figur 1 beispielhaft dargestellt - alternierend mit einer kurzen Pause ein- und üblicherweise in einem Strom- und/oder Spannungsnulldurchgang ausgeschaltet.

Der Ansteuerung AN wird ein Reglersignal RT einer Regeleinheit RE zugeführt, durch welches die Ansteuersignale der Schaltelemente S1, S2 zum Nachregeln der Schaltfrequenz der Schaltelemente S1, S2 entsprechend beeinflusst werden können. Die Reglereinheit RE kann beispielsweise - wie in Figur 1 dargestellt - auf der Sekundärseite des Transformators T bzw. des Resonanzwandlers angeordnet sein, wodurch das Reglersignal RT z.B. mittels einer nicht dargestellten Übertragungseinheit (z.B. Optokoppler, induktiver Übertrager, etc.) galvanisch getrennt auf die Primärseite des Resonanzwandlers übertragen werden muss. Als Regelgröße wird der Reglereinheit RE z.B. die jeweils aktuelle Ausgangsspannung Ua zugeführt, um diese z.B. auf einen vorgegebenen Ausgangsspannungswert einstellen zu können.

Weiterhin weist die Schaltungsanordnung bzw. der Resonanzwandler sekundärseitig zwei Sekundärwicklungen L3, L4 des Transformators T auf, über welche die Energie bzw. Leistung übertragen wird. Die Sekundärwicklungen können z.B. als zwei getrennte Induktivitäten L3, L4 oder als eine Sekundärwicklung mit Mittelanzapfung, durch welche zwei sekundärseitige Induktivitäten L3, L4 gebildet werden, ausgeführt sein. An die sekundärseitigen Induktivitäten L3, L4 ist die Gleichrichtereinheit GL zum Gleichrichten der in eine Wechselspannung gewandelten Eingangsspannung Ue angebunden. Die Gleichrichtereinheit GL kann z.B. zwei Dioden D1, D2 aufweisen, wobei beispielsweise eine erste Diode D1 zum Gleichrichten einer positiven Halbwelle des sekundärseitig erzeugten Wechselstromes i_{sec} und eine zweite Diode D2 zum Gleichrichten der negativen Halbwelle des sekundärseitig erzeugten Wechselstromes i_{sec} verwendet wird. Ausgangsseitig ist weiterhin eine Ausgangskapazität C2 vorgesehen.

Weiterhin weist die Schaltungsanordnung Einheiten ME1, ME2 zum Erfassen eines Stromflusses auf, durch welche auf der Sekundärseite ein Stromfluss der positiven bzw. negativen Halbwellen des sekundärseitigen Stroms i_{sec} ermittelt werden kann. Derartige Einheiten ME1, ME2 zum Erfassen des Stromflusses können beispielsweise vor oder nach der Gleichrichtereinheit GL angeordnet sein. D.h. eine Einheit ME1, ME2 zum Erfassen des Stromflusses kann z.B. in Serie vor oder nach der jeweiligen Diode D1, D2 der Gleichrichtereinheit GL derart angeordnet sein, dass dadurch ein Stromfluss des sekundärseitigen Stroms i_{sec} durch die jeweilige Gleichrichterdiode D1, D2 bestimmt werden kann, welcher durch die jeweilige positive oder negative Halbwelle des sekundärseitig induzierten Stroms i_{sec} erzeugt wird.

Als Einheit ME1, ME2 zum Erfassen des Stromflusses kann beispielsweise ein Messwiderstand (z.B. Shunt-Messwiderstand) verwendet werden. Durch den Stromfluss - erzeugt durch die jeweilige Halbwelle des sekundärseitigen Stroms i_{sec} - wird am Messwiderstand ME1, ME2 ein Spannungsabfall als Messsignal M1, M2 erzeugt. Anhand dieses Spannungsabfalls M1, M2 kann beispielsweise eine Zeitdauer des Stromflusses der jeweiligen Halbwelle bestimmt werden.

Alternativ kann das Erfassen des Stromflusses des sekundärseitigen Strom i_{sec} je Halbwelle auch induktiv erfolgen. Als Einheiten ME1, ME2 zum Erfassen des Stromflusses können beispielsweise induktive Stromwandler (z.B. Hallsensor, Stromzange, Rogowski-Stromwandler, etc.) eingesetzt werden, durch welche der Stromfluss der jeweiligen Halbwelle des sekundärseitigen Stroms i_{sec} in ein gut verarbeitbares, elektrisches Messsignale M1, M2 umgewandelt wird. Die Stromwandler ME1, ME2 können dabei derart angeordnet sein, dass ein Stromfluss durch die jeweilige Diode D1, D2 der Gleichrichtereinheit GL erfasst werden kann, welcher durch die jeweilige (positive oder negative) Halbwelle des sekundärseitigen Strom i_{sec} erzeugt wird.

Die Messsignale M1, M2 können beispielsweise mittels einer Auswerteeinheit AW derart ausgewertet werden, dass aus dem erfassten Stromfluss der positiven und negativen Halbwellen bzw. den entsprechenden Messsignalen M1, M2 eine Stromflussdauer sowie eine Zeitdauer einer Stromflusslücke im Stromfluss des sekundärseitigen Stroms i_{sec} in Bezug auf eine Gesamtperiodendauer abgeleitet wird. Dabei umfasst die Gesamtperiodendauer eine positive und eine negative Halbwelle des sekundärseitigen Strom i_{sec} sowie die zwischen den Halbwellen auftretenden Stromflusslücken. Weiterhin kann beispielsweise ein Verhältnis der Stromflussdauer des sekundärseitigen Stroms i_{sec} zur Dauer der Stromflusslücke in einer Gesamtperiode bestimmt werden. Eine Verarbeitung der Messsignale M1, M2 kann beispielsweise in analoger oder digitalisierter Form durch die Auswerteeinheit AW erfolgen.

Die Auswerteeinheit AW kann als eigene Einheit ausgeführt sein oder in die Reglereinheit RE integriert sein. Auswerteeinheit AW und Reglereinheit RE können beispielsweise als Mikrokontroller ausgeführt sein, insbesondere wenn die Auswerteeinheit AW bzw. die Auswertung der Messsignale M1, M2 in die Reglereinheit RE integriert ist.

Durch die Reglereinheit RE wird nun z.B. über das Reglersignal RT die Schaltfrequenz zum Ansteuern der Schaltelemente S1, S2 des Resonanzwandlers solange nachgeregelt, bis das Verhältnis der Stromflussdauer zur Zeitdauer der Stromflusslücke in Bezug auf die Gesamtperiodendauer des sekundärseitigen Stroms i_{sec} einen Maximalwert erreicht. Bei Erreichen des Maximalwerts ist die Schaltfrequenz des Resonanzwandlers so weit verändert, dass dieser im Resonanzpunkt - d.h. die Schaltfrequenz entspricht der Resonanzfrequenz des Resonanzwandlers - läuft.

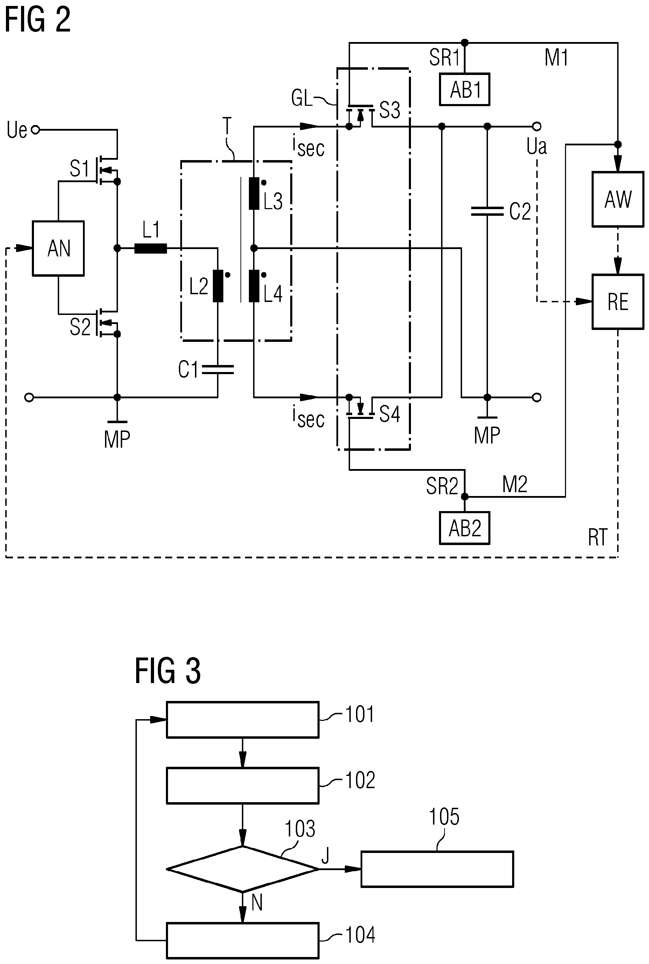

Figur 2 zeigt eine besondere Ausführungsform der Schaltungsanordnung zur Durchführung des erfindungsgemäßen Verfahrens zur Regelung eines Resonanzwandlers.

In Figur 2 ist der Resonanzwandler aus Figur 1 dargestellt, welcher eine galvanische Trennung T zwischen Primär- und Sekundärseite aufweist und z.B. als LLC-Resonanzwandler ausgestaltet ist. Die galvanische Trennung T wird durch den Transformator T umfassend die Primärwicklung L2 und die Sekundärwicklungen L3, L4 gebildet. Der Resonanzkreis des Resonanzwandlers wird von der Resonanzkapazität C1, der Resonanzinduktivität L1 sowie der Primärwicklung L2 des Transformators T gebildet. Weiterhin weist der Resonanzwandler zumindest zwei Schaltelemente S1, S2 (z.B. MOS-FETs, etc.) auf der Primärseite auf, welche mittels Ansteuersignalen der Ansteuerung AN alternierend mit einer kurzen Pause geschaltet werden. Für das entsprechende Schalten bzw. Takten wird den Schaltelementen S1, S2 eine Schaltfrequenz vorgegeben, welche über die Ansteuerung AN anhand des Reglersignals RT der Reglereinheit RE entsprechend verändert werden kann. An der Primärseite wird die Eingangsgleichspannung Ue angelegt, welche in eine Wechselspannung auf der Sekundärseite des Resonanzwandlers umgewandelt wird.

Auf der Sekundärseite des Resonanzwandlers ist eine Gleichrichtereinheit GL angebunden, durch welche aus der Wechselspannung die gleichgerichtete Ausgangsspannung Ua erzeugt wird. Die Eingangsspannung Ue und die Ausgangsspannung Ua können dabei auf ein Bezugspotential MP bezogen sein. Weiterhin ist ausgangsseitig die Ausgangskapazität C2 vorgesehen.

Anders als bei der in Figur 1 beispielhaft dargestellten Ausführungsform der Schaltungsanordnung ist bei der in Figur 2 beispielhaft dargestellten Ausführungsform der Schaltungsanordnung die Gleichrichtereinheit GL als Synchrongleichrichter ausgeführt. Der Synchrongleichrichter GL verfügt z.B. über zwei Schaltelemente S3, S4. Als Schaltelemente S3, S4 können z.B. Feldeffekttransistoren oder kurz FETs, insbesondere MOS-FETs, oder z.B. Galliumnitrid-Schalter verwendet werden. Für die Gleichrichtung des sekundärseitigen Stroms i_{sec} wird während einer Leitphase einer intrinsischen Diode des jeweiligen Schaltelements S3, S4 das jeweilige Schaltelement S3, S4 mittels eines entsprechenden Ansteuersignals SR1, SR2 eingeschaltet und während einer Sperrphase der intrinsischen Diode des jeweiligen Schaltelements S3, S4 mittels des entsprechenden Ansteuersignals SR1, SR2 ausgeschaltet.

Die entsprechenden Ansteuersignale SR1, SR2 werden dabei von jeweils zugehörigen Ansteuereinheiten AB1, AB2 auf Basis einer Drain-Source-Spannung am jeweiligen Schaltelement S3, S4 bzw. Feldeffekttransistor S3, S4 generiert. Dabei erzeugt beispielweise eine erste Ansteuereinheit AB1 ein erstes Ansteuersignal SR1 für ein erstes Schaltelement S3 des Synchrongleichrichters GL, mit welchem das erste Schaltelement S3 angesteuert wird. Ein zweite Ansteuereinheit AB2 erzeugt ein zweites Ansteuersignal SR2 zur Ansteuerung des zweiten Schaltelement S4 des Synchrongleichrichters GL. Dabei kann das jeweilige Schaltelement S3, S4 von der jeweiligen Ansteuereinheit AB1, AB2 idealerweise linear angesteuert werden, wodurch eine Stromtragzeit des jeweiligen Schaltelements S3, S4 bzw. die Dauer des Stromdurchflusses des sekundärseitigen Stroms i_{sec} durch das jeweilige Schaltelement S3, S4 deutlich erhöht und damit eine Verlustleistung reduziert wird.

Bei der in Figur 2 dargestellten Schaltungsanordnung werden nun die aktiven Schaltelemente S3, S4 des Synchrongleichrichters GL bzw. die Schaltwiderstände der aktiven Schaltelemente S3, S4 als Einheiten zum Erfassen des Stromflusses des sekundärseitig induzierten Stroms i_{sec} genutzt. Als Messsignale M1, M2, welche der Auswerteeinheit AW zugeführt werden, wird daher beispielsweise die Drain-Source-Spannung des jeweiligen aktiven Schaltelements S3, S4 bzw. die Ansteuersignale SR1, SR2 der Schaltelemente S3, S4 herangezogen, welche der Drain-Source-Spannung am jeweiligen Schaltelement S3, S4 entsprechen. D.h., die Ansteuersignale SR1, SR2 werden als Messsignale M1, M2 der Auswerteeinheit AW zugeführt und aus diesen die Stromflussdauer des sekundärseitigen Stroms i_{sec} sowie eine Zeitdauer der Stromflusslücke des sekundärseitigen Stroms i_{sec} in Bezug auf eine Gesamtperiodendauer abgeleitet. Dabei entspricht die Stromflussdauer des sekundärseitigen Stroms i_{sec} einer Einschaltdauer der zumindest zwei Schaltelemente S3, S4 je Gesamtperiodendauer und die Stromflusslücke des sekundärseitigen Stroms i_{sec} einer Ausschaltdauer je Gesamtperiodendauer, während welcher die zumindest zwei Schaltelemente S3, S4 des Synchrongleichrichters GL gleichzeitig ausgeschalten sind. Die entsprechende Auswertung der Messsignale M1, M2 bzw. der Ansteuersignale SR1, SR2 kann entweder analog oder digital erfolgen.

Für eine analoge Auswertung der Ansteuersignale SR1, SR2 bzw. zum Ableiten der Stromflussdauer bzw. der Dauer der Stromlücke im Stromfluss des sekundärseitigen Stroms i_{sec} kann die Auswerteeinheit AW beispielsweise Schmitttrigger-Gatter aufweisen, durch welche die Ansteuersignale SR1, SR2 digitalisiert werden. Die beiden digitalisierten Ansteuersignale SR1, SR2 werden z.B. mittels einer Beschaltung mit entsprechend dimensionierten Widerständen und Kondensatoren (RC-Beschaltung) gemittelt, um einen ersten gemittelten Analogwert zu generieren, welcher dann von der Reglereinheit RE zur Regelung der Schaltfrequenz genutzt wird.

Um beispielsweise Schaltungs- und Bauteiltoleranzen auszugleichen, kann in der Auswerteeinheit AW weiterhin eine Gatterschaltung (z.B. Schmitttrigger-Gatter mit entsprechender RC-Beschaltung) vorgesehen sein. Durch diese Gatterschaltung können die digitalisierten Ansteuersignale SR1, SR2 invertiert und gemittelt werden, um einen zweiten gemittelten Analogwert Wert zu erzeugen. In der Auswerteeinheit AW können dann beispielsweise der erste gemittelte Analogwert und der zweite gemittelte Analogwert miteinander verglichen werden. Im Idealfall ergibt eine Differenz dieser beiden Analogwerte den Wert Null.

Die Auswerteeinheit AW kann wieder als eigene Einheit ausgeführt oder in die Reglereinheit RE integriert sein. Auswerteeinheit AW und Reglereinheit RE können beispielsweise als Mikrokontroller ausgeführt sein, insbesondere wenn die Auswerteeinheit AW bzw. die Auswertung der Messsignale M1, M2 in die Reglereinheit RE integriert ist.

Durch die Reglereinheit RE wird nun z.B. über das Reglersignal RT die Schaltfrequenz zum Ansteuern der Schaltelemente S1, S2 des Resonanzwandlers derart nachgeregelt, bis der Resonanzwandler im Resonanzpunkt - d.h. die Schaltfrequenz entspricht der Resonanzfrequenz des Resonanzwandlers - läuft. Für die Nachregelung wird die Schaltfrequenz beispielsweise mit Hilfe des ersten gemittelten Analogwert - gegebenfalls korrigiert um Schaltungs- und Bauteiltoleranzen - von der Reglereinheit RE solange verändert, bis ein Verhältnis von Stromflussdauer des sekundärseitigen Stroms i_{sec} und Zeitdauer der Stromflusslücke des sekundärseitigen Stroms i_{sec} einen Maximalwert erreicht.

Alternativ kann die Auswertung der Ansteuersignale SR1, SR2 in der Auswerteeinheit auch digital erfolgen. Dazu wird z.B. aus den beiden Ansteuersignalen SR1, SR2 ein Summensignal erzeugt und daraus eine Stromflussdauer des sekundärseitigen Stroms i_{sec}, welche einer Einschaltdauer der Schaltelemente S3, S4 bezogen auf die Gesamtperiode entspricht, und eine Stromflusslücke des sekundärseitigen Stroms i_{sec}, welche einer Ausschaltdauer der Schaltelemente S3, S4 bezogen auf die Gesamtperiode entspricht, sowie ein Verhältnis der Stromflussdauer und der Dauer der Stromflusslücke abgeleitet. Die Schaltfrequenz der primärseitigen Schaltelemente S1, S2 wird dann durch Reglereinheit RE und mittels entsprechender Anpassung des Reglersignals RT solange nachgeregelt, bis das Verhältnis von Stromflussdauer und Zeitdauer der Stromflusslücke bezogen auf die Gesamtperiode einen Maximalwert aufweist.

Figur 3 zeigt beispielhaft einen Ablauf des erfindungsgemäßen Verfahren zur Regelung eines Resonanzwandlers. Dabei wird in einem Erfassungsschritt 101 auf der Sekundärseite des Resonanzwandlers ein Stromfluss des sekundärseitig induzierten Stroms i_{sec} als Messsignal M1, M2 erfasst. D.h., es wird der von den auftretenden positiven und negativen Halbwellen des sekundärseitig induzierten Stroms i_{sec} bewirkte Stromfluss mittels Einheiten ME1, ME2 zum Erfassen des Stromflusses als entsprechendes Messsignal M1, M2 (z.B. Spannungssignale, Stromsignale oder Ansteuersignale der Schaltelemente S3, S4 des Synchrongleichrichter GL) erfasst. Dabei kann der Stromfluss beispielsweise induktiv (z.B. mittels induktiver Stromwandler, Hallsensoren, etc.) oder mit Hilfe eines Messwiderstands (z.B. Shunt-Messwiderstand) bestimmt werden. Bei Verwendung eines Synchrongleichrichters als Gleichrichtereinheit GL - d.h. bei Einsatz von zumindest zwei Schaltelementen S3, S4 mit jeweils zugehörigen Ansteuereinheiten AB1, AB2 in der Gleichrichtereinheit GL - kann beispielsweise ein jeweiliger Schaltwiderstand des jeweiligen Schaltelements S3, S4 zum Erfassen des Stromflusses als Messsignal M1, M2 herangezogen werden. Dabei kann idealerweise das jeweilige Ansteuersignal SR1, SR2 des jeweiligen Schaltelements S3, S4 - wie bei Figur 2 bereits beschrieben - als Messsignal M1, M2 genutzt werden.

Der im Erfassungsschritt 101 als Messsignal M1, M2 erfasste Stromfluss der positiven und negativen Halbwellen des sekundärseitigen Stroms i_{sec} kann von den Einheiten ME1, ME2 zum Erfassen des Stromflusses an eine Auswerteeinheit AW weitergeleitet werden. Die Auswerteeinheit AW kann z.B. als eigene Einheit ausgeführt oder in die Reglereinheit RE integriert sein und mittels eines Mikrokontrollers realisiert sein.

In einem Ableitschritt 102 wird der erfasste Stromfluss des sekundärseitigen Strom i_{sec} bzw. das Messsignal M1, M2 der Einheiten ME1, ME2 zum Erfassen des Stromflusses beispielsweise in der Auswerteeinheit AW analog oder digital ausgewertet. Dabei wird aus dem erfassten Stromfluss der jeweiligen positiven und negativen Halbwellen des sekundärseitigen Stroms i_{sec} bzw. dem Messsignal M1, M2 eine Stromflussdauer des sekundärseitigen Stroms i_{sec} sowie eine Zeitdauer einer Stromflusslücke des sekundärseitigen Stroms i_{sec} in Bezug auf eine jeweilige Gesamtperiodendauer - d.h. einer Dauer von positiver Halbwelle, negativer Halbwelle sowie dazwischen auftretenden Unterbrechungen bzw. Lücken des sekundärseitig induzierten Stroms i_{sec} - abgeleitet.

Zusätzlich können im Ableitschritt 102 beim Auswerten des als Messsignal M1, M2 erfassten Stromflusses des sekundärseitigen Stroms i_{sec} bzw. beim Ableiten der Stromflussdauer und der Zeitdauer der Stromflusslücke in der Auswerteeinheit AW Schaltungs- und/oder Bauteiltoleranzen ausgeglichen werden.

In einem Prüfschritt 103 wird ein Verhältnis aus der für die jeweilige Gesamtperiodendauer bestimmten Stromflussdauer und der für die jeweilige Gesamtperiodendauer bestimmten Zeitdauer der Stromflusslücke des sekundärseitigen Stroms i_{sec} bestimmt. Dann wird geprüft, ob das Verhältnis aus Stromflussdauer und Zeitdauer der Stromflusslücke der jeweiligen Gesamtperiode einen Maximalwert erreicht hat.

Hat das Verhältnis den Maximalwert noch nicht erreicht, so werden in einem Regelschritt 104 mittels Reglereinheit RE die primärseitigen Schaltelemente S1, S2 des Resonanzwandlers bzw. deren Schaltfrequenz solange nachgeregelt, bis im Prüfschritt 103 das Verhältnis aus Stromflussdauer des sekundärseitigen Stroms i_{sec} und Zeitdauer der Stromflusslücke des sekundärseitigen Stroms i_{sec} in Bezug auf die jeweilige Gesamtperiodendauer den Maximalwert erreicht hat.

Wird im Prüfschritt 103 festgestellt, dass das Verhältnis aus Stromflussdauer des sekundärseitigen Stroms i_{sec} und Zeitdauer der Stromflusslücke des sekundärseitigen Stroms i_{sec} in Bezug auf die jeweilige Gesamtperiodendauer den Maximalwert erreicht hat, so kann die Nachregelung der Schaltfrequenz des Resonanzwandlers mit einem Beendigungsschritt 105 beendet werden. Durch Erreichen des Maximalwerts des Verhältnisses aus Stromflussdauer und Zeitdauer der Stromflusslücke wird erkannt, dass der Resonanzwandler im Resonanzpunkt läuft. D.h. das Nachregeln der Schaltfrequenz im Regelschritt 104 hat dazu geführt, dass eine Schaltfrequenz der Schaltelemente S1, S2 des Resonanzwandlers eingestellt wurde, welche der Resonanzfrequenz des Resonanzwandlers entspricht. Durch das Verfahren kann der Resonanzwandler im laufenden Betrieb exakt und dauerhaft im Resonanzpunkt und damit mit geringen Verlusten betrieben werden.

## Patentansprüche

1. Verfahren zur Regelung eines Resonanzwandlers, welcher sekundärseitig über eine galvanische Trennung (T), insbesondere über einen Transformator (T), mit einer Gleichrichtereinheit (GL) zum Erzeugen einer Ausgangspannung (Ua) verbunden ist, wobei der Resonanzwandler primärseitig zumindest zwei Schaltelemente (S1, S2) aufweist, welchen jeweils eine Schaltfrequenz vorgegeben wird, **dadurch *gekennzeichnet, dass*** sekundärseitig ein Stromfluss auftretender, positiver Halbwellen und negativen Halbwellen eines sekundärseitig induzierten Stroms (i_{sec}) als Messsignal (M1, M2) erfasst wird (101), dass aus dem als Messsignal (M1, M2) erfassten Stromfluss der jeweils auftretenden positiven und negativen Halbwellen des sekundärseitig induzierten Stroms (i_{sec}) eine Stromflussdauer des sekundärseitig induzierten Stroms (i_{sec}) sowie eine Zeitdauer einer Stromflusslücke des sekundärseitig induzierten Stroms (i_{sec}) für eine jeweilige Gesamtperiodendauer abgeleitet wird (102), dass ein Verhältnis der Stromflussdauer des sekundärseitig induzierten Stroms (i_{sec}) und der Zeitdauer der Stromflusslücke des sekundärseitig induzierten Stroms (i_{sec}) gebildet wird (103), und dass primärseitig die Schaltfrequenzen der zumindest zwei Schaltelemente (S1, S2) des Resonanzwandlers solange nachgeregelt wird (104), bis ein Verhältnis der Stromflussdauer des sekundärseitig induzierten Stroms (i_{sec}) und der Zeitdauer der Stromflusslücke des sekundärseitig induzierten Stroms einen Maximalwert aufweist (103, 105).

2. Verfahren nach Anspruch 1, ***dadurch gekennzeichnet, dass*** zum Erfassen des Stromflusses der auftretenden, positiven und negativen Halbwellen des sekundärseitig induzierten Stroms (i_{sec}) als Messsignal (M1, M2) Messwiderständen (ME1, ME2) eingesetzt werden (101).

3. Verfahren nach Anspruch 1 oder Anspruch 2, ***dadurch gekennzeichnet, dass*** in der Gleichrichtereinheit (GL) zumindest zwei Schaltelemente (S3, S4) eingesetzt werden, welche jeweils mittels einer zugehörigen Ansteuereinheit (AB1, AB2) angesteuert werden, und dass zum Erfassen des Stromflusses der auftretenden, positiven und negativen Halbwellen des sekundärseitig induzierten Stroms (i_{sec}) als Messsignal (M1, M2) ein jeweiliger Schaltwiderstand des jeweiligen Schaltelements (S3, S4) der Gleichrichtereinheit (GL) herangezogen wird (101).

4. Verfahren nach Anspruch 3, ***dadurch gekennzeichnet, dass*** die zumindest zwei Schaltelemente (S3, S4) der Gleichrichtereinheit (GL) durch die jeweils zugehörige Ansteuereinheit (AB1, AB2) linear angesteuert werden (101).

5. Verfahren nach Anspruch 1, ***dadurch gekennzeichnet, dass*** das Erfassen des Stromflusses der auftretenden, positiven und negativen Halbwellen des sekundärseitig induzierten Stroms (i_{sec}) als Messsignal (M1, M2) induktiv durchgeführt wird (101).

6. Verfahren nach einem der vorangegangenen Ansprüche, ***dadurch gekennzeichnet, dass*** zum Ableiten der Stromflussdauer und der Zeitdauer der Stromflusslücke des sekundärseitig induzierten Stroms (i_{sec}) für die jeweilige Gesamtperiodendauer und zum Bilden des Verhältnis von Stromflussdauer und Zeitdauer der Stromflusslücke des sekundärseitig induzierten Stroms (i_{sec}) der als Messsignal (M1, M2) erfasste Stromfluss einer Auswerteeinheit (AW) zugeführt wird (102, 103).

7. Verfahren nach einem der vorangegangenen Ansprüche, ***dadurch gekennzeichnet, dass*** die Stromflussdauer und die Zeitdauer der Stromflusslücke des sekundärseitig induzierten Stroms (i_{sec}) für die jeweilige Gesamtperiodendauer aus dem als Messsignal (M1, M2) erfassten Stromfluss des sekundärseitig induzierten Stroms (i_{sec}) analog oder digital bestimmt werden (102).

8. Verfahren nach einem der vorangegangenen Ansprüche, ***dadurch gekennzeichnet, dass*** beim Ableiten der Stromflussdauer und der Zeitdauer der Stromflusslücke des sekundärseitig induzierten Stroms (i_{sec}) für die jeweilige Gesamtperiodendauer aus dem als Messsignal (M1, M2) erfassten Stromfluss Schaltungstoleranzen und/oder Bauteiltoleranzen ausgeglichen werden (102).

9. Schaltungsanordnung zur Regelung eines zumindest zwei Schaltelemente (S1, S2) aufweisenden Resonanzwandlers, umfassend eine galvanische Trennung (T), insbesondere einen Transformator (T), und eine sekundärseitig angeordnete Gleichrichtereinheit (GL), wobei die Schaltungsanordnung zur Durchführung eines Verfahrens nach den Ansprüchen 1 bis 8 eingerichtet ist, ***dadurch* gekennzeichnet, *dass*** die Schaltungsanordnung aufweist:
- sekundärseitig angeordnete Einheiten (ME1, ME2) zum Erfassen eines Stromflusses von auftretenden, positiven und negativen Halbwellen des sekundärseitigen Stroms (i_{sec}) als Messsignal (M1, M2);
- eine Auswerteeinheit (AW) zum Ableiten einer Stromflussdauer des sekundärseitig induzierten Stroms (i_{sec}) sowie eine Zeitdauer einer Stromflusslücke des sekundärseitig induzierten Stroms (i_{sec}) aus dem als Messsignal (M1, M2) erfassten Stromfluss und zum Ermitteln eines Verhältnisses der Stromflussdauer des sekundärseitig induzierten Stroms (i_{sec}) und der Zeitdauer der Stromflusslücke des sekundärseitig induzierten Stroms (i_{sec}); und
- eine Reglereinheit (RE) zum Nachregeln der Schaltfrequenzen der zumindest zwei Schaltelemente (S1, S2) des Resonanzwandlers auf Basis des Verhältnisses zwischen Stromflussdauer und Zeitdauer der Stromflusslücke des sekundärseitig induzierten Stroms (i_{sec}).

10. Schaltungsanordnung nach Anspruch 9, ***dadurch gekennzeich*net, *dass*** die Einheiten (ME1, ME2) zum Erfassen des Stromflusses von auftretenden, positiven und negativen Halbwellen des sekundärseitig induzierten Stroms (i_{sec}) als induktive Stromwandler ausgeführt sind.

11. Schaltungsanordnung nach Anspruch 9, ***dadurch gekennzeich*net, *dass*** die Einheiten (ME1, ME2) zum Erfassen des Stromflusses der auftretenden, positiven und negativen Halbwellen des sekundärseitig induzierten Stroms (i_{sec}) als Messwiderstände ausgeführt sind.

12. Schaltungsanordnung nach Anspruch 9 oder Anspruch 11, ***dadurch gekennzeichnet, dass*** die Gleichrichtereinheit (GL) als Synchrongleichrichter ausgeführt ist, welcher zumindest zwei Schaltelemente (S3, S4) mit zugehörigen Ansteuereinheiten (AB1, AB2) aufweist.

13. Schaltungsanordnung nach einem der Ansprüche 9 bis 12, ***dadurch gekennzeichnet, dass*** die Auswerteeinheit (AW) in die Reglereinheit (RE) integriert ist.

14. Schaltungsanordnung nach einem der Ansprüche 9 bis 13, ***dadurch gekennzeichnet, dass*** der Resonanzwandler als Serienresonanzwandler, insbesondere als LLC-Wandler ausgeführt ist.
